# EUROPÄISCHE PATENTANMELDUNG

(11) **EP 1 895 186 A1**
(43) Veröffentlichungstag der Anmeldung: **05.03.2008**
(21) Anmeldenummer: 07114804.3
(22) Anmeldetag: 23.08.2007
(51) Int. Cl.: F16F 9/04

(54) **Luftfeder**

(30) Priorität: 31.08.2006 DE 102006040804
(71) Anmelder: ZF Friedrichshafen AG, 88038 Friedrichshafen (DE)
(72) Erfinder: Gell, Klaus, 94130 Obernzell (DE)

(57) **Zusammenfassung**

Eine Luftfeder weist einen Luftfederbalg (1) auf, welcher als Hohlzylinder ausgebildet ist, wodurch ein Dämpfer (19) so in der Luftfeder angeordnet werden kann, dass ein Spalt (24) entsteht, über welchen Umgebungsluft zum Dämpfer (19) gelangt und diesen kühlt.

## Beschreibung

Die Erfindung bezieht sich auf eine Luftfeder nach der im Oberbegriff von Anspruch 1 näher definierten Art.

Gattungsgemäße Luftfedern werden beispielsweise in Verbindung mit einem Stoßdämpfer zur Federung und Dämpfung in Mobilfahrzeugen, wie beispielsweise Omnibussen, eingesetzt.

Um eine kompakte Baueinheit zu schaffen, offenbart die EP 0 905 406 B1 eine Luftfeder mit integriertem Dämpfer, bei welchem der Dämpfer vollständig in der Luftfeder integriert ist und keinen Kontakt zur Umgebungsluft erhält, um den Dämpfer vor Verschmutzung zu schützen, wobei die Luft in der Luftfeder gezielt um den Dämpfer strömt, um diesen zu kühlen. Da bei der Komprimierung der Luft in der Luftfeder diese ebenfalls erwärmt wird, kann der Dämpfer nur ungenügend gekühlt werden.

Der vorliegenden Erfindung liegt die Aufgabe zugrunde, eine Luftfeder mit einem Dämpfer zu schaffen, welche sich durch eine kompakte Baueinheit auszeichnet und bei welcher der Dämpfer ausreichend gekühlt wird.

Die Aufgabe wird mit einer, auch die kennzeichnenden Merkmale des Hauptanspruchs aufweisenden, gattungsgemäßen Luftfeder gelöst.

Erfindungsgemäß weist die Luftfeder einen Luftfederbalg auf, welcher als Hohlzylinder ausgebildet ist. Dadurch ist es möglich, den Dämpfer im Luftfederbalg so anzuordnen, dass zwischen der inneren Begrenzung des Hohlzylinders des Luftfederbalgs und der äußeren Begrenzung des Dämpfers ein Spalt vorhanden ist, welcher so mit der Umgebung verbunden ist, dass Umgebungsluft in den Spalt gelangt. Vorzugsweise hat der Spalt eine Verbindung zur Umgebungsluft an der unteren Grundfläche des Luftfederbalgs und eine Verbindung zur Umgebungsluft an der oberen Grundfläche des Luftfederbalgs. Dadurch ist es möglich, dass allein durch die Konvektion der erwärmten Luft um den Dämpfer dieser gekühlt wird. Zusätzlich verändert sich der Spalt zwischen dem Luftfederbalg und dem Dämpfer bei jedem Einfedern und Ausfedern des Luftfederbalgs, wodurch beim Einfedern die erwärmte Luft aus dem Spalt gedrückt wird und beim Ausfedern kühle Umgebungsluft nachgesaugt wird. Vorzugsweise besteht der Luftfederbalg aus zwei Einzelelementen, wobei das eine Einzelelement die äußere Begrenzung des Hohlzylinders und das andere Einzelelement die innere Begrenzung des Hohlzylinders bilden. Dadurch ist es möglich, jeweils an den Grundflächen des Hohlzylinders Metallelemente mit dem Luftfederbalg zu verbinden, welche zur Befestigung des Luftfederbalgs, beispielsweise an Karosserie-Bauteilen oder Federträgern, dienen.

In einer weiteren Ausgestaltungsform der Erfindung ist die obere Grundfläche des Luftfederbalgs mit einem tellerförmigen Bauteil verbunden, wobei das tellerförmige Bauteil vorzugsweise einen Wulst mit konischen Flächen aufweist, wobei der Wulst kreisringförmig ausgebildet ist, wodurch die beiden Einzelelemente des Luftfederbalgs druckdicht abgedichtet werden können und somit einen druckdichten Raum bilden.

In einer weiteren Ausgestaltungsform der Erfindung beinhaltet das tellerförmige Bauteil einen Druckluftanschluß, über welchen der Druck im Luftfederbalg verändert werden kann. Das Bauteil an der unteren Grundfläche des Luftfederbalgs ist vorzugsweise kolbenförmig ausgebildet, wodurch dieses Bauteil ebenfalls einen hohlzylindrischen Raum aufweist, welcher mit dem Raum des Luftfederbalgs über Öffnungen im kolbenförmigen Element verbunden ist, wodurch ein zusätzlicher Druckraum für die Luftfeder entsteht. Das kolbenförmige Bauteil ist so ausgestaltet, dass seine Grundfläche mit einem Federträger und mit dem Dämpfer verbindbar ist. Zusätzlich weist die Grundfläche des kolbenförmigen Bauteils Öffnungen auf, durch welche Umgebungsluft in den Spalt zwischen dem Dämpfer und dem Luftfederbalg strömen kann.

In einer weiteren Ausgestaltungsform der Erfindung weist das Karosserie-Bauteil, beispielsweise der Federträger, zusätzlich Mittel zur gezielten Leitung der Umgebungsluft auf, durch welche Umgebungsluft gezielt zum Spalt geleitet wird, was beispielsweise durch gezielte Anströmung vom Fahrtwind möglich ist.

Der Luftfederbalg kann so ausgebildet sein, dass er einen Hohlzylinder bildet, welcher an keiner Stelle den Dämpfer berührt. Die Luftfeder ist somit kreisringförmig als eigenständiges Bauteil ausgebildet, wodurch der Dämpfer, ohne dass die Luftfeder demontiert werden muß, in einem Servicefall getauscht werden kann. Zusätzlich wird der Luftfederbalg durch die Bewegung des Dämpfers nicht beschädigt.

In einer weiteren Ausgestaltungsform kann zwischen dem Dämpfer und dem Luftfederbalg ein Trennrohr angeordnet sein, welches verhindert, dass bei einem Einfedern der Luftfederbalg so in Richtung Dämpfer zusammengedrückt wird, dass der Luftfederbalg den Dämpfer berührt.

In einer weiteren Ausgestaltungsform kann der Luftfedebalg als ein kreisringförmiger Körper, wie beispielsweise ein Schlauch eines Autoreifens, ausgebildet sein, wobei die Druckluftzuführung, wie das Ventil beim Autoreifen, anvulkanisiert sein kann.

Indem der Luftfederbalg den Dämpfer nicht berührt besteht die Möglichkeit, den Luftfederbalg im unteren Bereich des Dämpfers, somit im Bereich des beweglichen Dämpferrohrs, anzuordnen, und muß nicht im Bereich des statischen Dämpferrohrs angeordnet werden.

Indem der Luftfederbalg einen Hohlzylinder bildet, in welchem der Dämpfer angeordnet ist, und zwischen dem Dämpfer und dem Hohlzylinder ein Spalt vorhanden ist, ist es möglich, den Dämpfer mit Umgebungsluft zu kühlen und zusätzlich eine kompakte Baueinheit zu schaffen.

Weitere Merkmale sind der Figuren-Beschreibung zu entnehmen.

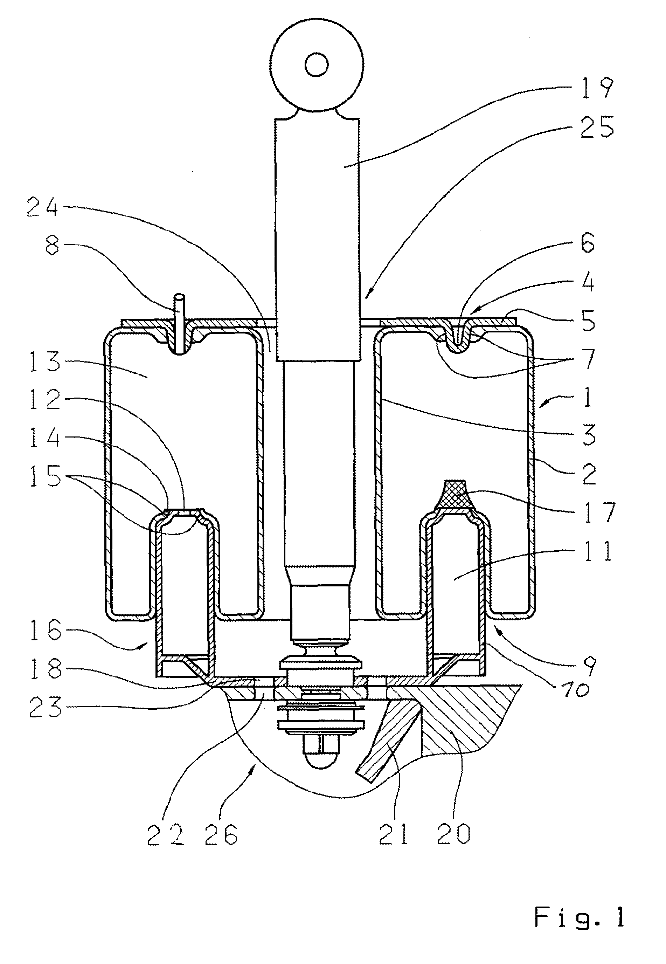

Die einzige Figur zeigt eine Luftfeder mit einem Luftfederbalg 1, welcher aus einem äußeren Einzelelement 2 und einem inneren Einzelelement 3 besteht. Das äußere Einzelelement 2 bildet die radial äußere Begrenzung des Luftfederbalgs 1 und das innere Einzelelement 3 bildet die radial innere Begrenzung des Luftfederbalgs 1, wodurch der Luftfederbalg 1 als Hohlzylinder ausgebildet ist. Die obere Grundfläche 4 des Hohlzylinders wird durch ein tellerförmiges Element 5 gebildet, welches einen Wulst 6 aufweist, welcher konische Flanken 7 beinhaltet. Der Wulst 6 ist kreisringförmig angeordnet und dichtet mit seinen konischen Flanken 7 das äußere Element 2 und das innere Element 3 druckdicht ab. Zusätzlich ist im Wulst 6 eine Druckluftzuführung 8 angeordnet. Es besteht auch die Möglichkeit, die Druckluftzuführung 8 im kolbenförmigen Element 10 anzuordnen. An der unteren Grundfläche 9 des Hohlzylinders ist ein kolbenförmiges Element 10 angeordnet, welches einen hohlzylindrischen Raum 11 bildet, welcher über Öffnungen 12 mit dem Raum 13 des Luftfederbalgs 1 verbunden ist. Das kolbenförmige Element 10 weist ebenfalls einen Wulst 14 auf, in welchem die Öffnungen 12 angeordnet sind, und welcher konische Flanken 15 aufweist, über welche das äußere Einzelelement 2 und das innere Einzelelement 3 zur Umgebung 16 druckdicht abgedichtet sind. Auf dem Wulst 14 ist ein elastisches Element 17 angeordnet, welches bei vollständigem Einfedern der Luftfeder einen Anschlag für den Wulst 6 bildet, damit die Luftfeder nicht weiter zusammengedrückt werden kann. Das kolbenförmige Element 10 weist eine Grundfläche 18 auf, mittels welcher der Dämpfer 19 und die Luftfeder mit einem Federträger 20 verbunden werden kann. Der Federträger 20 weist Mittel 21 zur Leitung der Umgebungsluft zu den Öffnungen 22 und 23 auf, über welche Umgebungsluft aus der Umgebung 16 in den Spalt 24 strömen kann. Da die Luftfeder sowohl an ihrem oberen Ende 25 als auch an ihrem unteren Ende 26 mit der Umgebung 16 verbunden ist, strömt Umgebungsluft durch den Spalt 24 und kühlt den Dämpfer 19. Beim Einfedern deformiert sich das innere Einzelelement 3, so dass der Spalt 24 verändert wird, wodurch Luft im Spalt 24 entweicht, und beim Ausfedern verändert sich die Form des inneren Einzelelementes 3 derart, dass Luft aus der Umgebung 16 wieder in den Spalt 24 gelangt.

Es besteht auch die Möglichkeit, dass der Luftfederbalg 1 nur am tellerförmigen Element 5 eine kreisringförmige Öffnung, welche über den Wulst 6 druckdicht abgedichtet ist, aufweist und am kolbenförmigen Element 10 ungeteilt ausgeführt ist. Das elastische Element 17 kann in diesem Fall einstückig mit dem Luftfederbalg 1 ausgeführt sein, und es besteht die Möglichkeit, über Fixierungselemente den Luftfederbalg 1 am kolbenförmigen Element 10 zu fixieren.

Es besteht auch die Möglichkeit, den Luftfederbalg 1 einstückig auszubilden, wobei dieser einstückige Luftfederbalg 1 am kolbenförmigen Element 10 eine kreisringförmige Öffnung aufweist, und der Luftfederbalg 1 über Fixierungselemente mit dem tellerförmigen Element 5 verbunden ist. Das elastische Element 17 kann hierbei ebenfalls einstückig mit dem Luftfederbalg 1 ausgeführt sein.

### Bezugszeichen

- 1: Luftfederbalg
- 2: äußeres Einzelelement
- 3: inneres Einzelelement
- 4: obere Grundfläche
- 5: tellerförmiges Element
- 6: Wulst
- 7: konische Flächen
- 8: Druckluftzuführung
- 9: untere Grundfläche
- 10: kolbenförmiges Element
- 11: Raum
- 12: Öffnungen
- 13: Raum
- 14: Wulst
- 15: konische Flächen
- 16: Umgebung
- 17: elastisches Element
- 18: Grundfläche
- 19: Dämpfer
- 20: Federträger
- 21: Leitmittel
- 22: Öffnung
- 23: Öffnung
- 24: Spalt
- 25: oberes Ende
- 26: unteres Ende

## Patentansprüche

1. Luftfeder mit einem Luftfederbalg (1), welcher einen geschlossenen Raum (13) bildet, wobei die Luftfeder mit einem Dämpfer (19) in Wirkverbindung steht, **dadurch gekennzeichnet , dass** der Luftfederbalg (1) einen Hohlzylinder bildet und der Dämpfer (19) so angeordnet ist, dass zwischen der inneren Begrenzung des Hohlzylinders und der äußeren Begrenzung des Dämpfers ein Spalt (24) vorhanden ist, in weichen Umgebungsluft gelangt, welche den Dämpfer (19) kühlt.

2. Luftfeder nach Anspruch 1, **dadurch gekennzeichnet , dass** der Luftfederbalg (1) aus zwei Einzelelementen (2, 3) besteht, wobei das eine Einzelelement (2) die äußere Begrenzung des Hohlzylinders und das andere Einzelelement (3) die innere Begrenzung des Hohlzylinders bilden.

3. Luftfeder nach Anspruch 2, **dadurch gekennzeichnet , dass** ein tellerförmiges Bauteil (5) an der oberen Grundfläche (4) des Hohlzylinders die beiden Einzelelemente (2, 3) verbindet.

4. Luftfeder nach Anspruch 2, **dadurch gekennzeichnet , dass** ein kolbenförmiges Bauteil (10) an der unteren Grundfläche (9) des Hohlzylinders die beiden Einzelelemente (2, 3) verbindet.

5. Luftfeder nach Anspruch 3, **dadurch gekennzeichnet , dass** das tellerförmige Bauteil (5) einen kreisringförmigen Wulst (6) mit konischen Flanken (7) aufweist, über welche die beiden Einzelelemente (2, 3) druckdicht vebunden werden.

6. Luftfeder nach Anspruch 4, **dadurch gekennzeichnet , dass** das kolbenförmige Bauteil (10) einen kreisringförmigen Wulst (14) mit konischen Flanken (15) aufweist, über welche die beiden Einzelelemente (2, 3) druckdicht verbunden werden.

7. Luftfeder nach Anspruch 6, **dadurch gekennzeichnet, dass** der Wulst (14) Öffnungen (12) aufweist, wodurch ein Raum (11), welcher das kolbenförmige Bauteil (10) bildet, mit dem Raum (13), welcher durch den Luftfederbalg (1) gebildet wird, verbunden wird.

8. Luftfeder nach Anspruch 6, **dadurch gekennzeichnet , dass** auf dem Wulst (14) elastische Elemente (17) angeordnet sind, welche bei vollständigem Einfedern der Luftfeder als Begrenzung des Federweges dienen.

9. Luftfeder nach Anspruch 4, **dadurch gekennzeichnet , dass** das kolbenförmige Bauteil (10) eine Grundfläche (18) zur Befestigung der Luftfeder mit einem Dämpfer (19) aufweist, wobei zusätzlich in der Grundfläche (18) Öffnungen (23) vorhanden sind, welche den Spalt (24) mit der Umgebung (16) verbinden.

10. Luftfeder nach Anspruch 3, **dadurch gekennzeichnet , dass** das tellerförmige Bauteil (5) eine Druckluftzuführung (8) aufweist.

11. Luftfeder nach Anspruch 1, **dadurch gekennzeichnet , dass** die Luftfeder mit einem Federträger (20) verbindbar ist, welcher Mittel (21) zur gezielten Leitung von Luft zum Spalt (24) aufweist.

## Geänderte Patentansprüche

### Geänderte Patentansprüche gemäss Regel 137(2) EPÜ.

**1.** Luftfeder mit einem Luftfederbalg (1), welcher einen geschlossenen Raum (13) bildet, wobei die Luftfeder mit einem Dämpfer (19) in Wirkverbindung steht, wobei der Luftfederbalg (1) einen Hohlzylinder bildet und der Dämpfer (19) so angeordnet ist, dass zwi-schen der inneren Begrenzung des Hohlzylinders und der äußeren Begrenzung des Dämpfers ein Spalt (24) vorhanden ist, in welchen Umgebungsluft gelangt, welche den Dämpfer (19) kühlt, **dadurch gekennzeichnet, dass** der Luftfederbalg (1) aus zwei Einzelelementen (2, 3) besteht, wobei das eine Einzelelement (2) die äußere Begrenzung des Hohlzylinders und das andere Einzelelement (3) die innere Begrenzung des Hohlzylinders bilden.

**2.** Luftfeder nach Anspruch 1, **dadurch gekennzeichnet, dass** ein tellerförmiges Bauteil (5) an der oberen Grundfläche (4) des Hohlzylinders die beiden Einzelelemente (2, 3) verbindet.

**3.** Luftfeder nach Anspruch 1, **dadurch gekennzeichnet, dass** ein kolbenförmiges Bauteil (10) an der unteren Grundfläche (9) des Hohlzylinders die beiden Einzelelemente (2, 3) verbindet.

**4.** Luftfeder nach Anspruch 2, **dadurch gekennzeichnet, dass** das tellerförmige Bauteil (5) einen kreisringförmigen Wulst (6) mit konischen Flanken (7) aufweist, über welche die beiden Einzelelemente (2, 3) druckdicht vebunden werden.

**5.** Luftfeder nach Anspruch 3, **dadurch gekennzeichnet, dass** das kolbenförmige Bauteil (10) einen kreisringförmigen Wulst (14) mit konischen Flanken (15) aufweist, über welche die beiden Einzelelemente (2, 3) druckdicht verbunden werden.

**6.** Luftfeder nach Anspruch 5, **dadurch gekennzeichnet, dass** der Wulst (14) Öffnungen (12) aufweist, wodurch ein Raum (11), welcher das kolbenförmige Bauteil (10) bildet, mit dem Raum (13), welcher durch den Luftfederbalg (1) gebildet wird, verbunden wird.

**7.** Luftfeder nach Anspruch 5, **dadurch gekennzeichnet, dass** auf dem Wulst (14) elastische Elemente (17) angeordnet sind, welche bei vollständigem Einfedern der Luftfeder als Begrenzung des Federweges dienen.

**8.** Luftfeder nach Anspruch 3, **dadurch gekennzeichnet, dass** das kolbenförmige Bauteil (10) eine Grundfläche (18) zur Befestigung der Luftfeder mit einem Dämpfer (19) aufweist, wobei zusätzlich in der Grundfläche (18) Öffnungen (23) vorhanden sind, welche den Spalt (24) mit der Umgebung (16) verbinden.

**9.** Luftfeder nach Anspruch 2, **dadurch gekennzeichnet, dass** das tellerförmige Bauteil (5) eine Drucktuftzuführung (8) aufweist.

**10.** Luftfeder nach Anspruch 1, **dadurch gekennzeichnet, dass** die Luftfeder mit einem Federträger (20) verbindbar ist, welcher Mittel (21) zur gezielten Leitung von Luft zum Spalt (24) aufweist.
